# EUROPÄISCHE PATENTSCHRIFT

(11) **EP 2 979 742 B1**
(45) Veröffentlichungstag und Bekanntmachung des Hinweises auf die Patenterteilung: **21.09.2022**
(21) Anmeldenummer: 14179375.2
(22) Anmeldetag: 31.07.2014
(51) Int. Cl.: B01D 46/10, A47L 9/12, B01D 46/52, F24F 13/28

(54) **Halterung für ein Filtermedium**
Holder for a filter medium
Fixation de matériau filtrant

(43) Veröffentlichungstag der Anmeldung: 03.02.2016
(73) Patentinhaber: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(56) Entgegenhaltungen:
- DE-A1- 2 020 246
- US-A- 4 363 643

## Beschreibung

Die vorliegende Erfindung betrifft eine Halterung für ein Filtermedium sowie ein Filtersystem mit einer derartigen Halterung und einem Filtermedium.

Bei einer Vielzahl von Anwendungen ist es erforderlich, ein Filtermedium an einem bestimmten Ort und in einer bestimmten Form zu halten. Beispiele für spezifische Formen sind Flachfilter unterschiedlicher Form, gewölbte flächige Filter, plissierte (bzw. gefaltete) flache und plissierte gewölbte Filter, plissierte zylindrische Filter. Durch das plissierte Profil kann bei gleicher Grundfläche die Filterfläche erhöht werden. Anwendungen für derartig plissierte Filter finden sich in Staubsaugern, beispielsweise als Motorschutzfilter oder als Ausblas- bzw. Abluftfilter sowohl für Staubsauger mit Staubfilterbeuteln als auch für beutellose Staubsaugern. Daneben werden plissierte Filter auch bei raumlufttechnischen Anlagen, als Kfz-Innenraumfilter oder auch als Flüssigkeitsfilter eingesetzt.

Damit ein plissierter Filter sein Faltenprofil im Betrieb beibehält, muss das Filtermedium in beständiger Weise mit dem Faltenprofil ausgerüstet sein. Alternativ oder zusätzlich wird das Filtermedium durch eine geeignete Halterung in gefalteter Form gehalten.

Ein Filterhalter ist beispielsweise aus der GB 2478515 bekannt. Der gezeigt Filterhalter besteht aus zwei Teilen, die jeweils eine Mehrzahl paralleler Stangen aufweisen. Im Einsatz wird ein flexibles Filtermaterial über eines der beiden Teile gelegt und das andere Teil in das erste Teil gedrückt, so dass die Stangen des zweiten Teils das Filtermaterial in die Lücken zwischen den Stangen des ersten Teils drückt.

Der Nachteil dieser Lösung besteht darin, dass beim Hineindrücken des einen Teils in das andere die Gefahr des Reißens des Filtermediums besteht. Diese Gefahr ist umso größer, je höher die Falten des Filtermediums schließlich sein sollen.

Die EP 2 724 653 zeigt ein Filtersystem, das als Filterkassette in Form einer Platte ausgebildet ist. In dieser Filterkassette befinden sich ein erstes und ein zweites Filter. Das erste Filter ist als einstückiges Gewebe ausgeführt und weist im Querschnitt ein gefaltetes Profil auf. Einseitig am ersten Filter ist ein einteiliges zweites Filter angeordnet, das aus einem offenporigen Material, nämlich aus Melaminschaum besteht. Das zweite Filter weist im Querschnitt ein Profil von nebeneinander angeordneten geometrischen Figuren auf und füllt auf der einen Seite die Zwischenräume des ersten Filters aus.

Weitere Halterungen für Filtermedien sind beispielsweise aus der WO 03/059490 der EP 2 674 086, der US 4,363,643 und der US 2,074,294 bekannt.

Die DE 20 20 246 betrifft einen Gasfilter mit aus einer durchlaufenden Filtermaterialbahn gefalteten Taschen, deren Ränder an gegenüberliegenden Rahmenplatten befestigt sind und wobei innerhalb der Scheitel der Falten zwischen den Rahmenplatten jeweils ein Stützelement angeordnet ist. Das Ende einer von einer Rolle zugeführten Filtermaterialbahn wird an einem Randstützelement beispielsweise durch Verkleben befestigt und dann werden aufeinanderfolgend einzelne Faltentaschen gebildet. Hierfür wird jeweils ein Element, das aus zwei keilförmigen Einsätzen mit einem Verbindungsstützelement gebildet wird, nach genügender Zufuhr der Filtermaterialbahn in zwei einander gegenüberliegende keilförmige Nuten der Rahmenseitenplatten eingeschoben. Nach Bildung sämtlicher Faltentaschen wird auf das obere Ende des Rahmens ein Gitter mit Befestigungsrand aufgebracht und befestigt.

Angesichts des Stands der Technik besteht das der Erfindung zugrundeliegende Problem darin, eine Halterung für ein Filtermedium bereitzustellen, mit der in zuverlässiger Weise das Filtermedium in gefalteter Form gehalten werden kann. Diese Aufgabe wird durch eine Halterung für ein Filtermedium gemäß Anspruch 1 gelöst.

Erfindungsgemäß wird eine Halterung für ein Filtermedium bereitgestellt, umfassend eine Auflageeinrichtung und eine Fixiereinrichtung,
wobei die Auflageeinrichtung eine Mehrzahl von parallel zueinander angeordneten Auflageelementen aufweist, die jeweils durch einen Zwischenraum voneinander getrennt sind,
wobei die Fixiereinrichtung eine Mehrzahl von Fixierelementen aufweist, die jeweils in einen Zwischenraum zwischen zwei Auflageelemente einbringbar angeordnet sind,
wobei die Fixierelemente beweglich miteinander oder bewegbar mit einem Rahmen verbunden sind,
wobei die Fixierelemente einzeln und/oder relativ zueinander bewegbar angeordnet sind, so dass die Fixierelement nacheinander in die Zwischenräume einbringbar sind.

Insbesondere aufgrund der einzeln und/oder relativ zueinander bewegbar angeordneten Fixierelemente lässt sich ein eingelegtes Filtermedium zuverlässig in eine gefaltete Form bringen und/oder in dieser halten, ohne dass die Gefahr einer Beschädigung, insbesondere eines Reißens des Filtermediums besteht. Die Halterung kann derart ausgebildet sein, dass das Filtermedium zwischen der Auflageeinrichtung und der Fixiereinrichtung anordenbar und durch diese beiden, insbesondere in einer gefalteten oder plissierten Form, haltbar ist.

Die Fixierelemente können separat voneinander und/oder unabhängig voneinander und/oder abhängig voneinander bewegbar angeordnet sein. Die Fixierelemente können separat voneinander und/oder unabhängig voneinander und/oder abhängig voneinander in die Zwischenräume einbringbar angeordnet sein. Insbesondere sind die Fixierelemente nacheinander bzw. sequenziell in die Zwischenräume einbringbar angeordnet.

Damit wird ermöglicht, dass die Falten nacheinander (sequenziell) in das Filtermedium eingebracht werden. Insbesondere im Gegensatz zu einem im Wesentlichen gleichzeitigen Einbringen der Fixierelemente in die Zwischenräume wird auf diese Weise eine übermäßige Belastung des Filtermediums (insbesondere unter Zug) vermieden.

Bei den zuvor beschriebenen Halterungen können ein, mehrere oder alle Auflageelemente einen Steg aufweisen. Alternativ oder zusätzlich können ein, mehrere oder alle Fixierelemente einen Steg aufweisen. Durch einen derartigen Steg wird eine vorteilhafte Positionierung des Filtermediums in einer plissierten Struktur, d.h. in einer Struktur mit Falten, ermöglicht. Die Stege können parallel zu den Zwischenräumen und/oder parallel zueinander verlaufen. Die Stege können entlang jedes Auflageelements und/oder jedes Fixierelements durchgängig ausgebildet ist. Alternativ können die Stege längs der Auflageelemente und/oder der Fixierelemente auch teilweise unterbrochen sein.

Die Fixierelemente können parallel zueinander angeordnet sein. Die Auflageelemente können einen konstanten Abstand zueinander aufweisen. Alternativ oder zusätzlich können die Fixierelemente einen konstanten Abstand zueinander aufweisen. Damit wird eine gleichmäßige Faltenstruktur erreicht. Insbesondere können die Auflageelemente und die Fixierelemente den gleichen Abstand zueinander aufweisen.

Die Auflageelemente und/oder die Fixierelemente können ein Dreiecksprofil aufweisen. Mit einem solchen Dreiecksprofil lässt sich in besonders vorteilhafter Weise ein bestimmtes Falten- oder Zickzackprofil des Filtermediums erzielen.

Die Auflageelemente und/oder die Fixierelemente können als durchbrochene Elemente ausgebildet sein bzw. Öffnungen aufweisen. Damit kann Luft durch die Auflageeinrichtung und die Fixiereinrichtung und damit auch durch ein dazwischen gehaltenes Filtermedium strömen.

Bei den zuvor beschriebenen Halterungen können die Auflageelemente und/oder die Fixierelemente jeweils untereinander verbunden sein, insbesondere unmittelbar untereinander verbunden sein. Beispielsweise können jeweils benachbarte Fixierelemente miteinander verbunden sein. Sie können insbesondere beweglich, beispielsweise um eine gemeinsame Achse rotierbar, miteinander verbunden sein. Alternativ können insbesondere die Fixierelemente nicht untereinander oder miteinander, insbesondere nicht unmittelbar untereinander oder miteinander verbunden sein. In diesem Fall können sie beispielsweise einzeln mit einem Rahmen, insbesondere bewegbar, verbunden sein.

Die Auflageelemente und/oder die Fixierelemente können ein starres Material umfassen und/oder aus einem starren Material bestehen. Das starre Material kann insbesondere ein Kunststoff, beispielsweise ein Thermoplast oder ein Duroplast, sein.

Die Fixierelemente können mittels einer Rotations- und/oder einer Translationsbewegung bewegbar angeordnet sein.

Beispielsweise können benachbarte Fixierelemente miteinander über eine Dreh- oder Schwenkachse verbunden sein. Alternativ können die Fixierelemente einzeln über eine Dreh- oder Schwenkachse mit einem Rahmen bewegbar verbunden sein. Alternativ können die Fixierelemente jeweils mittels einer Translationsbewegung an einem Rahmen bewegbar angeordnet sein. Sie können beispielsweise jeweils in einem Führungselement, beispielsweise einer Führungsschiene, verschiebbar angeordnet sein.

Die zuvor beschriebenen Halterungen können eine Arretiereinrichtung zum Arretieren der Fixierelemente nach dem Einbringen in die Zwischenräume umfassen. Die Arretiereinrichtung kann zum separaten und/oder unabhängigen Arretieren jedes Fixierelements ausgebildet sein. Beispielsweise kann die Arretiereinrichtung eine Mehrzahl von Arretierelementen aufweisen, wobei jedes Arretierelement einem Fixierelement zu dessen Arretierung zugeordnet ist. Alternativ kann die Arretiereinrichtung zum gemeinsamen oder gleichzeitigen Arretieren aller Fixierelemente ausgebildet sein. Die Arretiereinrichtung kann lösbar ausgebildet sein.

Jedes Fixierelement kann derart ausgebildet sein, dass es eine Ausgangslage einnehmen kann, in der es nicht in einen Zwischenraum zwischen zwei Fixierelemente eingebracht ist (also außerhalb des Zwischenraums angeordnet ist), und eine Fixierlage einnehmen kann, in der es vollständig in einen Zwischenraum zwischen zwei Auflageelementen eingebracht ist. Vollständig eingebracht bedeutet, dass das Fixierelement nicht noch weiter in den Zwischenraum einbringbar ist.

Die Arretiereinrichtung kann eine Rückstelleinrichtung aufweisen, so dass die Fixierelemente nach Lösen der Arretierung durch die Rückstelleinrichtung in die Ausgangslage verbringbar sind. Beispielweise kann die Rückstelleinrichtung eine Mehrzahl von Rückstellelementen umfassen, die jeweils einem Fixierelement zugeordnet sind. Die Rückstelleinrichtung kann eine Feder umfassen. Insbesondere kann jedes Rückstellelement eine Feder umfassen.

Die zuvor beschriebenen Halterungen können einen Rahmen umfassen, an dem die Auflageeinrichtung, die Fixiereinrichtung und/oder die Arretiereinrichtung angeordnet sind.

Der Rahmen kann aufklappbar ausgebildet sein. Dies erlaubt das Einlegen eines flachen Filtermaterials in besonders leichter und vorteilhafter Weise.

Die Halterungen können eine Dichtungseinrichtung zum Abdichten eines Zwischenraums zwischen der Auflageeinrichtung und der Fixiereinrichtung umfassen. Damit soll verhindert werden, dass ein durch die Halterung mit einem eingebrachten/fixierten Filtermedium strömender Luftstrom neben das Filtermedium entweicht und nicht durch dieses hindurch strömt. Die Dichtungseinrichtung kann beispielsweise an einer umlaufenden Außenseite der Fixiereinrichtung und/oder der Auflageeinrichtung vorgesehen sein. Die Dichtungseinrichtung kann beispielsweise einen Kunststoff, insbesondere einen Thermoplasten, beispielsweise mit einer geringeren Shore-Härte als die Fixiereinrichtung und/oder die Auflageeinrichtung umfassen. Alternativ oder zusätzlich kann die Dichtungseinrichtung einen Schlauch, insbesondere einen aufblasbaren Schlauch, oder ein offenporiges oder geschlossenporiges Material, beispielsweise einen Schaum, umfassen. Alternativ kann die Dichtungseinrichtung eine, insbesondere auf das Filtermedium abgestimmten, Anordnung einer Nut und einer darin eingreifenden Feder umfassen. Gemäß einer weiteren Alternative kann die Dichtungseinrichtung eine Schneidkante umfassen, die auf eine Oberfläche drückbar ist, die eine geringere Shore-Härte als die Schneidkante aufweist.

Die Erfindung stellt weiterhin eine Filtervorrichtung mit einer der zuvor schon beschriebenen Halterungen und einem Filtermedium bereit, wobei das Filtermedium zwischen der Auflageeinrichtung und der Fixiereinrichtung in plissiertem oder gefaltetem Zustand gehaltert wird.

Darüber hinaus wird ein Staubsauger, umfassend eine derartige Filtervorrichtung, bereitgestellt. Der Staubsauger kann insbesondere ein Motorschutzfilter oder einen Ausblasfilter in Form der zuvor beschriebenen Filtervorrichtungen umfassen.

Außerdem werden eine raumlufttechnische Anlage, ein KFZ-Innenraumfilter und ein Flüssigkeitsfilter, umfassend eine der zuvor beschriebenen Filtervorrichtungen, bereitgestellt.

Das Filtermedium kann ein Filtermedium zur Luftfiltration und/oder ein Filtermedium zur Flüssigkeitsfiltration sein. Das Filtermedium umfasst insbesondere ein Vlies oder einen Vliesstoff. Der Begriff Vliesstoff wird im Sinne der Norm DIN EN ISO 9092:2010 verstanden. Dabei werden insbesondere Film- und Papierstrukturen, insbesondere Filterpapier, nicht als Vliesstoff angesehen. Ein "Vlies" ist eine Struktur aus Fasern und/oder Endlosfilamenten oder Kurzfasergarnen, die durch irgendein Verfahren zu einem Flächengebilde geformt wurden (ausgenommen die Verflechtung von Garnen wie in gewobenem Gewebe, geknüpftem Gewebe, Maschenware, Spitze oder getuftetem Gewebe), allerdings nicht durch irgendein Verfahren verbunden wurden. Durch ein Verbindeverfahren wird aus einem Vlies ein Vliesstoff.

Das Filtermedium kann eine oder mehrere Lagen Vlies und/oder eine oder mehrere Lagen Vliesstoff umfassen. Es kann insbesondere in Form eines Laminats aus einer oder mehrerer Lagen Vlies und/oder einer oder mehrerer Lagen Vliesstoff ausgebildet sein. Ein derartiges Laminat ist beispielsweise in der WO 2007/068444 beschrieben.

Das Filtermedium kann ein Filterpapier und/oder einen Membranfilter, gegebenenfalls auch in Kombinationen mit einem Vliesstoffe oder Vlies, umfassen.

Die Erfindung stellt weiterhin ein Verfahren zum Erzeugen eines gefalteten Filtermediums bereit, umfassend die Schritte:
Bereitstellen einer der zuvor beschriebenen Halterungen,
Einlegen eines planen Filtermediums,
aufeinanderfolgendes Einbringen der Fixierelemente in den Zwischenräumen zwischen den Auflageelementen.

Auf diese Weise lässt sich durch das aufeinanderfolgende bzw. sequentielle Einbringen der Fixierelemente das ursprünglich plane Filtermedium in einen gefalteten oder plissierten Zustand bringen.

Weitere Merkmale der Erfindung werden nachfolgend anhand der Figuren beschrieben. Dabei zeigt:
Fig. 1 eine schematische Seitenansicht eines Beispiels einer Halterung für ein Filtermedium;
Fig. 2 eine schematische Schrägansicht eines Beispiels einer Halterung für ein Filtermedium;
Fig. 3 eine schematische Querschnittsansicht eines Beispiels einer Halterung für ein Filtermedium mit einem Filtermedium und einer Dichtung;
Fig. 4 eine schematische Ansicht eines Beispiels einer Halterung für ein Filtermedium;
Fig. 5 eine schematische perspektivische Schnittansicht des Beispiels von Fig. 4.

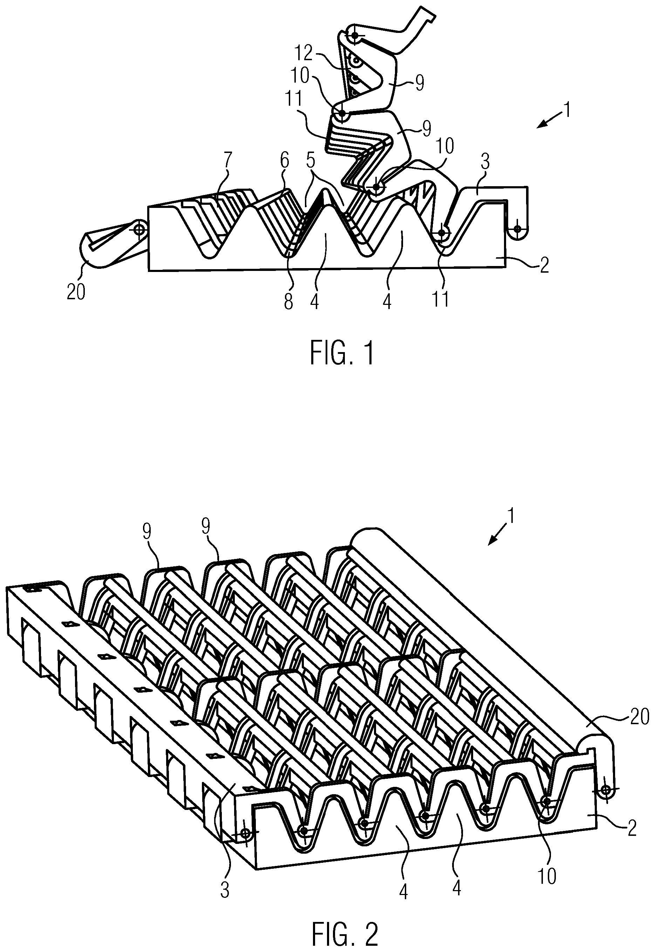

Figur 1 ist eine schematische Ansicht eines Beispiels einer Halterung 1 für ein Filtermedium. Die Halterung umfasst eine Auflageeinrichtung 2 und eine Fixiereinrichtung 3.

Die Halterung dient dazu, ein Filtermedium, beispielsweise umfassend einen einlagigen oder mehrlagigen Aufbau aus Vlies und/oder Vliesstoff, zwischen der Auflageeinrichtung und der Fixiereinrichtung zu haltern, insbesondere zu fixieren. Dabei wird vorzugsweise das Filtermedium zwischen der Auflageeinrichtung und der Fixiereinrichtung eingeklemmt.

Die Auflageeinrichtung und die Fixiereinrichtung können das gleiche Material umfassen oder aus diesem bestehen. Alternativ können Auflageeinrichtung und Fixiereinrichtung auch unterschiedliche Materialien umfassen oder daraus bestehen. Gemäß einem Beispiel können die Auflageeinrichtung und die Fixiereinrichtung aus einem Kunststoff, insbesondere aus demselben Kunststoff, bestehen. Die Auflageeinrichtung und die Fixiereinrichtung können mittels Spritzgussverfahren hergestellt sein.

Die Auflageeinrichtung 2 weist eine Mehrzahl von parallel zueinander angeordneten Auflageelementen 4 auf, die jeweils durch einen Zwischenraum 5 voneinander getrennt sind. In dem gezeigten Beispiel weisen die Auflageelemente ein Dreiecksprofil (im Querschnitt bzw. in Seitenansicht) auf. Alle Auflageelemente weisen einen Steg 6 auf, der in dem gezeigten Beispiel entlang jedes Auflageelements durchgängig ausgebildet ist. Alternativ können die Stege längs der Auflageelemente auch teilweise unterbrochen sein.

In Längsrichtung weisen die Auflageelemente 4 Rippen 7 auf, die die Stege 6 stützen. Über die Stützrippen 7 sind benachbarte Auflageelemente 4 miteinander verbunden.

Am Boden bzw. in den Tälern der Zwischenräume (d.h. am tiefsten Punkt der Zwischenräume) sind wiederum jeweils sich in Längsrichtung (d.h. parallel zu den Auflageelementen) erstreckende Stege 8 angeordnet. Im Betrieb wird das Filtermedium insbesondere auf den Stegen 6 aufliegen. Gegebenenfalls kann es darüber hinaus auf den Stegen 8 und/oder den Stützrippen 7 aufliegen.

Die Fixiereinrichtung 3 weist eine Mehrzahl von Fixierelementen 9 auf. Die Fixierelemente 9 sind ebenfalls parallel zueinander angeordnet. Die Fixierelemente 9 sind relativ zueinander bewegbar vorgesehen und angeordnet. Im vorliegenden Beispiel weisen die Fixierelemente 9 eine Bogenform auf. Benachbarte Fixierelemente 9 sind über eine Schwenkachse 10 schwenkbar miteinander verbunden. Damit sind die Fixierelemente, insbesondere benachbarte Fixierelemente relativ zueinander bewegbar, im vorliegenden Fall relativ zueinander verschwenkbar angeordnet. Die Fixierelemente 9 können somit einzeln oder separat in die Zwischenräume 5 eingebracht werden. Dieses einzelne Einbringen kann insbesondere sequentiell (nacheinander) erfolgen. Das Einbringen findet demnach nach Art eines Reißverschlusses statt.

Die Fixierelemente 9 weisen einen Steg 11 auf. Dieser ist jeweils an der im eingebrachten Zustand am tiefsten in den Zwischenraum eingebrachten Stelle angeordnet. Die Fixierelemente 9 weisen, analog zum Fall der Auflageelemente, Rippen 12 zum Stützen der Stege 11 auf. Diese Rippen 12 stabilisieren jeweils die Fixierelemente 9. Die Fixierelemente 9 weisen eine zu den Auflageelementen 4 komplementäre Gestalt oder Form auf. Die Fixierelemente können jeweils einen in Längsachse durchgängigen oder durchbrochenen Steg 11 aufweisen.

Um ein Filtermedium in die Filterhalterung einzulegen und darin zu fixieren, wird die Fixiereinrichtung in einen Zustand bzw. eine Position gebracht, in der die Fixierelemente nicht in die Zwischenräume zwischen den Auflageelementen der Auflageeinrichtung eingebracht sind. In diesem Zustand wird ein Filtermedium auf die Auflageeinrichtung, insbesondere die Auflageelemente, gelegt.

Das Filtermedium kann zur Fluidfiltration, insbesondere der Flüssigkeits- und/oder Gasfiltration, ausgebildet sein. Das Filtermedium kann ein- oder mehrlagig ausgebildet sein. Es kann eine oder mehrere Lagen aus Filterpapier, eine oder mehrere Lagen aus Vlies und/oder eine oder mehrere Lagen aus Vliesstoff umfassen.

Das auf die Auflageeinrichtung aufgelegte Filtermedium weist eine in Längsrichtung (also quer zu den Auflageelementen und/oder den Zwischenräumen) längere Ausdehnungen auf, als die Länge der Grundfläche der Auflageeinrichtung in dieser Richtung. Nach dem Auflegen des Filtermediums werden, von einer Seite beginnend, die Fixierelemente nacheinander (sequentiell) in die Zwischenräume eingebracht. Beim Einbringen eines Fixierelements in einen Zwischenraum wird dabei das Filtermedium in den Zwischenraum 5 gezogen bzw. gedrückt. Das Einbringen eines Fixierelements soll vorzugsweise derart erfolgen, dass das benachbarte Fixierelement dabei (noch) nicht in den entsprechenden benachbarten Zwischenraum eingebracht ist. Dieses Einbringen erfolgt sequentiell für alle Fixierelemente, so dass am Schluss das Filtermedium eine Zickzackform aufweist, die sich durch das Fixieren des Filtermediums zwischen den Auflageelementen und den Fixierelementen ergibt.

Aufgrund des sequentiellen Einbringens der Fixierelemente 9, was im gezeigten Beispiel durch ein Verschwenken erfolgt, wird eine Plissierung des Filtermediums erreicht, bei der das Filtermedium allenfalls geringfügig, insbesondere auf Zug, beansprucht wird. Eine Beschädigung des Filtermediums beim Plissieren bzw. Falten wird auf diese Weise vermieden. Die Halterung stellt eine zuverlässige Beibehaltung der gefalteten Struktur des Filtermediums sicher. Durch ein Öffnen der Halterung, was durch ein Auseinanderbringen der Fixiereinrichtung und der Auflageeinrichtung erfolgt, kann das Filtermedium in einfacher Weise ausgetauscht werden.

Figur 2 zeigt schematisch eine Ansicht der Halterung aus Fig. 1, bei der die Fixiereinrichtung vollständig mit der Auflageeinrichtung in Eingriff gebracht wurde. Mit anderen Worten sind alle Fixierelemente vollständig in den jeweiligen Zwischenraum zwischen zwei Auflageelementen eingebracht.

Die Halterung kann weiterhin eine Arretiereinrichtung umfassen, mit der die Fixiereinrichtung an der Auflageeinrichtung fixiert werden kann. In dem in Fig. 1 gezeigten Beispiel umfasst die Arretiereinrichtung einen Bügel 20, mit dem das äußerste Fixierelement an die Auflageeinrichtung geklemmt werden kann.

Alternativ oder zusätzlich kann ein Rahmen vorgesehen sein, in den die beispielsweise in Fig. 1 gezeigte Halterung eingeschoben werden kann, so dass alle Fixierelemente 9 in ihrem eingebrachten Zustand fixiert werden.

Vorzugsweise ist die Halterung 1 für das Filtermaterial mit einer Dichtung versehen, die sicherstellt, dass die Luft nicht neben der Halterung vorbeiströmen kann.

Durch das Einschieben in einen entsprechend ausgestatteten Bauraum eines Staubsaugers kann außerdem dafür gesorgt werden, dass die Fixiereinrichtung 3 fest auf die Auflageeinrichtung 2 gepresst werden.

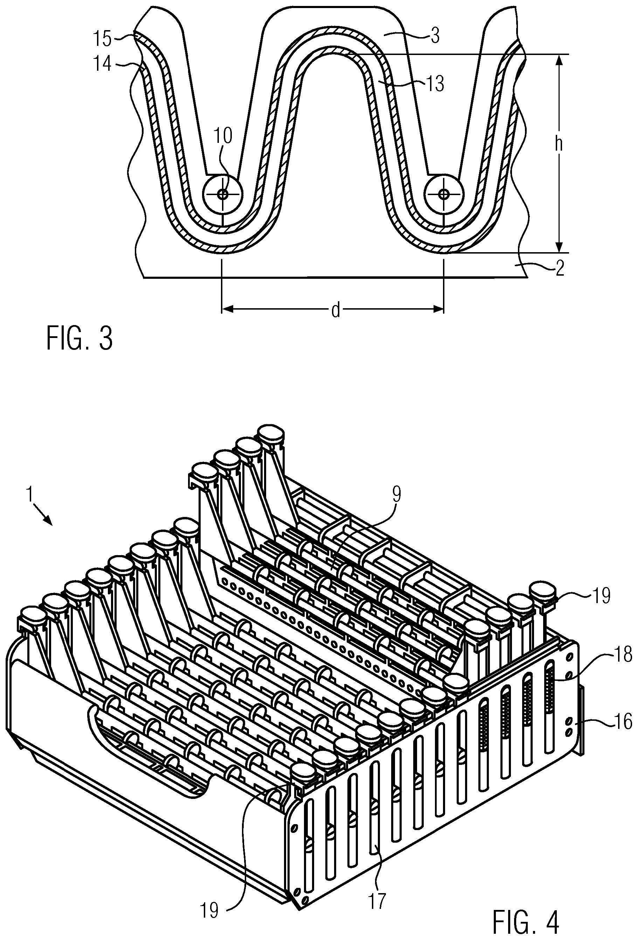

Figur 3 ist eine schematische Querschnittsansicht eines Teils einer Halterung für ein Filtermedium, wobei hier bereits ein Filtermedium 13 zwischen Auflageeinrichtung und Fixiereinrichtung gehaltert wird bzw. fixiert ist. In dem in Fig. 3 gezeigten Beispiel ist weiterhin eine Dichtungseinrichtung vorgesehen, die in diesem Beispiel ein die Auflageeinrichtung und ein die Fixiereinrichtung umlaufendes Dichtungsmaterial, insbesondere jeweils einen Strang aus Dichtungsmaterial, umfasst.

Das Dichtungsmaterial 14 an der Auflageeinrichtung kann das gleiche Material oder ein anderes Material als die Dichtung 15 an der Fixiereinrichtung sein. Es kann sich jeweils beispielsweise um einen thermoplastischen Kunststoff handeln, der insbesondere eine geringere Shore-Härte als das Material der Auflageeinrichtung bzw. Fixiereinrichtung hat. Alternativ kann es sich um einen aufpumpbaren Schlauch handeln. Gemäß einer weiteren Alternative ist ein offenporiger Schaum vorgesehen.

Durch die Dichtungseinrichtung wird vermieden, dass im Betrieb ein das Filtermedium durchströmendes Fluid (beispielsweise Flüssigkeit oder Gas) seitlich aus der Halterung entweichen kann. Durch die Dichtungseinrichtung soll das Filtermedium umlaufend zwischen der Auflageeinrichtung und der Fixiereinrichtung verpresst sein.

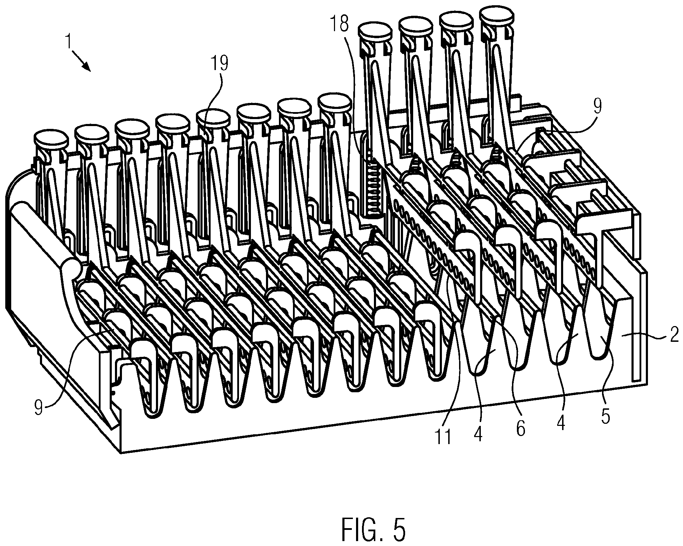

Figuren 4 und 5 zeigen ein alternatives Beispiel einer Halterung 1 für ein Filtermedium. Auch hier ist eine Auflageeinrichtung 2 vorgesehen, die eine Mehrzahl von Auflageelementen 4 aufweist. Die Fixiereinrichtung weist eine Mehrzahl von Fixierelementen 9 auf, die einzeln und unabhängig voneinander bewegbar angeordnet sind. Insbesondere können die hier gezeigten Fixierelemente 9 separat und unabhängig voneinander in die Zwischenräume 5 eingebracht werden. Hierfür sind die Fixierelemente 9 in in einem Rahmen 16 vorgesehenen Schienen 17 verschiebbar angeordnet. Anders als im Beispiel der Fig. 1 sind somit die Fixierelemente nicht mittels einer Rotationsbewegung, sondern mittels einer Translationsbewegung bewegbar angeordnet.

Um ein Filtermedium in der Halterung zu fixieren, werden alle Fixierelemente 9 nach oben geschoben. Dies kann beispielsweise mittels eines Federmechanismus 18 erfolgen. Die Fixierelemente können in diesem Zustand arretierbar sein. Dann wird das Filtermedium auf die Auflageeinrichtung bzw. die Stege der Auflageelemente gelegt. Dazu kann ein Rahmen der Halterung aufklappbar gestaltet sein, so dass das Einlegen des Filtermaterials erleichtert wird. Wie im Beispiel der Fig. 1 muss auch hier die Länge des Filtermediums quer zur Stegrichtung länger als die Länge der Grundfläche der Auflageeinrichtung in dieser Richtung sein.

Nach dem Auflegen werden die Fixierelemente 9, eines nach dem anderen, beginnend auf einer der beiden Seiten nach unten gedrückt bzw. geschoben, wodurch das Filtermedium in den entsprechenden Zwischenraum eingezogen bzw. geschoben oder gedrückt wird. Nachdem alle Fixierelemente 9 sequentiell in die jeweiligen Zwischenräume eingebracht worden sind, liegt ein plissiertes Filtermedium vor. Auch bei diesem Beispiel kann eine Arretiereinrichtung 19 vorgesehen sein, mit der entweder alle Fixierelemente 9 gleichzeitig, oder jedes Fixierelement einzeln (wie im illustrierten Beispiel) im vollständig eingebrachten Zustand und/oder im vollständig geöffneten, d.h. aus dem jeweiligen Zwischenraum entfernten, Zustand arretiert werden kann.

Die Materialien der Halterung können analog zu den zuvor beschriebenen Beispielen gewählt sein. Insbesondere können die Auflageelemente und/oder die Fixierelemente aus Kunststoff spritzgegossen sein. Darüber hinaus kann wiederum eine Dichtungseinrichtung, insbesondere in Form eines umlaufenden Dichtungsmaterials vorgesehen sein.

In den beschriebenen Beispielen kann die Höhe h der Fixierelemente (siehe Fig. 3) vom Boden bzw. tiefsten Punkt des Zwischenraums bis zum höchsten Punkt des Auflageelements (gemessen senkrecht zur Grundfläche der Auflageeinrichtung) von 5 mm bis 300 mm. Der Abstand d zwischen den tiefsten Punkten zweier benachbarter Zwischenräume kann von 5 mm bis 50 mm, insbesondere von 10 mm bis 25 mm betragen. Die Fixierelemente können eine gleiche Form oder unterschiedliche Formen sowie gleiche Dimensionierungen oder unterschiedliche Dimensionierungen aufweisen. In den gezeigten Beispielen sind die Auflageelemente und die Fixierelemente jeweils gleich ausgebildet.

## Patentansprüche

1. Halterung (1) für ein Filtermedium, umfassend eine Auflageeinrichtung (2) und eine Fixiereinrichtung (3),
wobei die Auflageeinrichtung (2) eine Mehrzahl von parallel zueinander angeordneten Auflageelementen (4) aufweist, die jeweils durch einen Zwischenraum (5) voneinander getrennt sind,
wobei die Fixiereinrichtung (3) eine Mehrzahl von Fixierelementen (9) aufweist, die jeweils in einen Zwischenraum (5) zwischen zwei Auflageelementen (4) einbringbar angeordnet sind,
wobei die Fixierelemente beweglich miteinander oder bewegbar mit einem Rahmen verbunden sind,
wobei die Fixierelemente einzeln und/oder relativ zueinander bewegbar angeordnet sind, so dass die Fixierelemente nacheinander in die Zwischenräume einbringbar sind.

2. Halterung nach Anspruch 1, wobei die Fixierelemente separat voneinander und/oder unabhängig voneinander und/oder abhängig voneinander bewegbar angeordnet sind.

3. Halterung nach Anspruch 1 oder 2, wobei die Fixierelemente separat voneinander und/oder unabhängig voneinander und/oder abhängig voneinander in die Zwischenräume einbringbar angeordnet sind.

4. Halterung nach einem der vorangegangenen Ansprüche, wobei ein, mehrere oder alle Auflageelemente einen Steg (6) aufweisen.

5. Halterung nach einem der vorangegangenen Ansprüche, wobei ein, mehrere oder alle Fixierelemente (9) einen Steg (11) aufweisen.

6. Halterung nach einem der vorangegangenen Ansprüche, wobei die Fixierelemente parallel zueinander angeordnet sind.

7. Halterung nach einem der vorangegangenen Ansprüche, wobei die Auflageelemente und/oder die Fixierelemente ein Dreiecksprofil aufweisen.

8. Halterung nach einem der vorangegangenen Ansprüche, wobei die Auflageelemente untereinander verbunden sind.

9. Halterung nach einem der vorangegangenen Ansprüche, wobei die Auflageelemente und/oder die Fixierelemente ein starres Material umfassen und/oder aus einem starren Material bestehen.

10. Halterung nach einem der vorangegangenen Ansprüche, wobei die Fixierelemente mittels einer Rotations- und/oder einer Translationsbewegung bewegbar angeordnet sind.

11. Halterung nach einem der vorangegangenen Ansprüche, umfassend eine Arretiereinrichtung zum Arretieren der Fixierelemente nach dem Einbringen in die Zwischenräume.

12. Halterung nach einem der vorangegangenen Ansprüche, wobei die Arretiereinrichtung zum separaten und/oder unabhängigen Arretieren jedes Fixierelements ausgebildet ist.

13. Halterung nach einem der vorangegangenen Ansprüche, umfassend einen Rahmen, an dem die Auflageeinrichtung, die Fixiereinrichtung und/oder die Arretiereinrichtung angeordnet sind.

14. Halterung nach einem der vorangegangenen Ansprüche, umfassend eine Dichtungseinrichtung zum Abdichten eines Zwischenraums zwischen der Auflageeinrichtung und der Fixiereinrichtung.

15. Filtervorrichtung mit einer Halterung nach einem der vorangegangenen Ansprüche und einem Filtermedium, wobei das Filtermedium zwischen der Auflageeinrichtung und der Fixiereinrichtung in plissiertem Zustand gehaltert wird.

16. Staubsauger umfassend eine Filtervorrichtung nach Anspruch 15.

17. Verfahren zum Erzeugen eines gefalteten Filtermediums, umfassend die Schritte:
Bereitstellen einer Halterung nach einem der Ansprüche 1 - 14,
Einlegen eines planen Filtermediums,
aufeinanderfolgendes Einbringen der Fixierelemente in die Zwischenräume zwischen den Auflageelementen.

## Claims

1. A holder (1) for a filter medium, comprising support means (2) and fixing means (3),
wherein the support means (2) include a plurality of support elements (4) arranged parallel to each other and separated by a gap (5),
wherein the fixing means (3) include a plurality of fixing elements (9) arranged to be insertable into a gap (5) between two support elements (4),
wherein the fixing elements are connected to each other to be mobile or movably connected to a frame,
wherein the fixing elements are arranged so as to be movable individually and/or relative to each other, so that the fixing elements can be successively inserted into the gaps.

2. The holder according to claim 1, wherein the fixing elements are arranged to be movable separately and/or independently of each other and/or dependently on each other.

3. The holder according to claim 1, wherein the fixing elements are arranged to be insertable into the gaps separately and/or independently of each other and/or dependently on each other.

4. The holder according to any one of the preceding claims, wherein one or more or all of the support elements include a web (6).

5. The holder according to any one of the preceding claims, wherein one or more or all of the fixing elements (9) include a web (11).

6. The holder according to any one of the preceding claims, wherein the fixing elements are arranged parallel to each other.

7. The holder according to any one of the preceding claims, wherein the support elements and/or the fixing elements have a triangular profile.

8. The holder according to any one of the preceding claims, wherein the support elements are connected to each other.

9. The holder according to any one of the preceding claims, wherein the support elements and/or the fixing elements comprise a rigid material and/or are made of a rigid material.

10. The holder according to any one of the preceding claims, wherein the fixing elements are arranged to be movable in a rotational and/or a translational movement.

11. The holder according to any one of the preceding claims, comprising a locking means for locking the fixing elements after insertion into the gaps.

12. The holder according to any one of the preceding claims, wherein the locking means are configured for separately and/or independently locking each fixing element.

13. The holder according to any one of the preceding claims, comprising a frame on which the support means, the fixing means and/or the locking means are disposed.

14. The holder according to any one of the preceding claims, comprising sealing means for sealing a space between the support means and the fixing means.

15. A filter device comprising a holder according to any one of the preceding claims and a filter medium, wherein the filter medium is held between the support means and the fixing means in a pleated form.

16. A vacuum cleaner comprising a filter device according to claim 15.

17. A method for forming a folded vacuum cleaner filter bag, comprising the following steps:
providing a holder according to any one of claims 1 - 14,
applying a flat filter medium,
successively inserting the fixing elements into the gaps between the support elements.

## Revendications

1. Support (1) pour un milieu filtrant, comprenant un dispositif d'appui (2) et un dispositif de fixation (3),
le dispositif d'appui (2) présentant une pluralité d'éléments d'appui (4) disposés parallèlement les uns aux autres qui sont respectivement séparés les uns des autres par un espace intermédiaire (5),
le dispositif de fixation (3) présentant une pluralité d'éléments de fixation (9) qui sont disposés chacun de manière à pouvoir être insérés dans un espace intermédiaire (5) entre deux éléments d'appui (4),
les éléments de fixation étant reliés de manière mobile les uns aux autres ou de manière mobile à un cadre,
les éléments de fixation étant disposés de manière à pouvoir se déplacer individuellement et/ou les uns par rapport aux autres, de sorte que les éléments de fixation peuvent être introduits les uns après les autres dans les espaces intermédiaires.

2. Support selon la revendication 1, dans lequel les éléments de fixation sont disposés de manière à être mobiles séparément les uns des autres et/ou indépendamment les uns des autres et/ou les uns par rapport aux autres.

3. Support selon la revendication 1 ou 2, dans lequel les éléments de fixation sont disposés séparément les uns des autres et/ou indépendamment les uns des autres et/ou les uns en fonction des autres et peuvent être disposés dans les espaces intermédiaires.

4. Support selon l'une des revendications précédentes, dans lequel un, plusieurs ou tous les éléments d'appui présentent une nervure (6).

5. Support selon l'une des revendications précédentes, dans lequel un, plusieurs ou tous les éléments de fixation (9) présentent une nervure (11).

6. Support selon l'une des revendications précédentes, dans lequel les éléments de fixation sont disposés parallèlement les uns aux autres.

7. Support selon l'une des revendications précédentes, dans lequel les éléments d'appui et/ou les éléments de fixation présentent un profil triangulaire.

8. Support selon l'une des revendications précédentes, dans lequel les éléments d'appui sont reliés entre eux.

9. Support selon l'une des revendications précédentes, dans lequel les éléments d'appui et/ou les éléments de fixation comprennent un matériau rigide et/ou sont constitués d'un matériau rigide.

10. Support selon l'une des revendications précédentes, dans lequel les éléments de fixation sont agencés de manière mobile au moyen d'un mouvement de rotation et/ou de translation.

11. Support selon l'une des revendications précédentes, comprenant un dispositif de blocage pour bloquer les éléments de fixation après leur insertion dans les espaces intermédiaires.

12. Support selon l'une des revendications précédentes, dans lequel le dispositif de blocage est conçu pour bloquer séparément et/ou indépendamment chaque élément de fixation.

13. Support selon l'une des revendications précédentes, comprenant un cadre sur lequel sont disposés le dispositif de support, le dispositif de fixation et/ou le dispositif de blocage.

14. Support selon l'une des revendications précédentes, comprenant un moyen d'étanchéité pour rendre étanche un espace intermédiaire entre le dispositif d'appui et le dispositif de fixation.

15. Dispositif de filtration comprenant un support selon l'une des revendications précédentes et un milieu filtrant, dans lequel le milieu filtrant est maintenu entre le dispositif d'appui et le dispositif de fixation à l'état plissé.

16. Aspirateur comprenant un dispositif de filtration selon la revendication 15.

17. Procédé de production d'un milieu filtrant plissé, comprenant les étapes consistant à :
fournir un support selon l'une quelconque des revendications 1 à 14,
mettre en place un milieu filtrant plat,
insérer successivement des éléments de fixation dans les espaces intermédiaires entre les éléments d'appui.
